# EUROPÄISCHE PATENTSCHRIFT

(11) **EP 3 411 609 B1**
(45) Veröffentlichungstag und Bekanntmachung des Hinweises auf die Patenterteilung: **06.03.2024**
(21) Anmeldenummer: 17706136.3
(22) Anmeldetag: 16.01.2017
(51) Int. Cl.: F16G 5/08, F16G 5/20

(54) **UMMANTELTER KEILRIEMEN UND VERBUNDRIEMEN**
SHEATHED V-BELT AND COMPOSITE BELT
COURROIE TRAPÉZOÏDALE GAINÉE ET COURROIE COMPOSITE

(30) Priorität: 02.02.2016 DE 102016001268
(43) Veröffentlichungstag der Anmeldung: 12.12.2018
(73) Patentinhaber: Arntz Beteiligungs GmbH & Co. KG, 37671 Höxter (DE)
(72) Erfinder: GIBSON, Daniel Pattie, 37671 Höxter (DE); WIEMERS, Andreas, 33102 Paderborn (DE); SCHNABEL, Werner, 37671 Höxter (DE); NUTT, Thomas, 37696 Marienmünster (DE)
(74) Vertreter: Kröncke, Rolf
(86) Internationale Anmeldenummer: PCT/DE2017/100021
(87) Internationale Veröffentlichungsnummer: WO 2017/133723

(56) Entgegenhaltungen:
- EP-A1- 1 734 280
- EP-A2- 1 217 253
- WO-A1-2010/066505
- DE-A1- 2 034 506
- DE-T2- 60 112 448
- US-B1- 6 491 598

## Beschreibung

Die Erfindung betrifft einen ummantelten Keilriemen mit einem Riemenkörper aus einer radikalisch vernetzten Elastomermischung und mit einer abriebfesten Ummantelung sowie einen Verbundriemen, der wenigstens zwei derartige ummantelte Keilriemenkörper enthält gemäß Anspruch 1.

Keilriemen sind als Transmissions elemente in der Antriebstechnik weit verbreitet. Sie zeichnen sich durch eine bessere seitliche Führungsstabilität und weniger Schlupf als Flachriemen aus und bewirken eine effektive reibschlüssige Kraftübertragung über die Riemenflanken. Es handelt sich heute im Allgemeinen um nahtfreie Endlosriemen.

Einzelkeilriemen kann man in klassische Keilriemen und Schmalkeilriemen unterteilen. Beide Formen haben meist einen in etwa trapezförmigen Kern und in aller Regel eine Zuglage, die flächig ausgebildet oder aus einzelnen, in Laufrichtung parallel gelegten oder gewickelten Zugsträngen zusammengesetzt ist. Ummantelte Keilriemen werden als eher robuste Elemente vielfach im klassischen Maschinenbau, insbesondere im Bereich Gartenbaugeräte, Landmaschinen und Baumaschinen, aber auch in Industrieanwendungen eingesetzt.

Die Keilriemenkörper, auch als Kerne bezeichnet, bestehen aus Gummi, d.h. einem Elastomermaterial, das durch Vulkanisation bzw. Vernetzung aus einer sogenannten Elastomermischung, klassisch auch als Kautschukmischung bezeichnet, erhalten wird. Die Bezeichnung "Vulkanisation" wird auch unabhängig von einem Schwefeleinsatz verwendet, z.B. allgemein für die radikalische Vernetzung von Synthesekautschuken, häufig mit Peroxiden.

Als "Elastomermischung" wird die das Riemenelastomer bildende Mischung aus (Co)Polymeren, verstärkenden Füllstoffen, Weichmachern und anderen, speziellen sowie allgemein üblichen, Zusatz- und Hilfsstoffen (Additiven) und im weiteren Sinne der "Inhalt" bzw. die Bestandteile des gehärteten Elastomers, d.h. Grundelastomer und weitere Bestandteile, verstanden. Das Riemenelastomer wird also durch Vernetzen oder Vulkanisieren im weiteren Sinne aus einer Mischung aus vernetzbaren Polymeren, Vernetzungsmittel, verstärkendem Füllstoff, ggf. Coagentien sowie ggf. weiteren Zusatz- und Hilfsstoffen aus dem sogenannten Kautschukvorprodukt bzw. einem Vorprodukt aus der Elastomermischung erhalten. Die Formgebung für das Produkt wird in einem Schritt vor der Vulkanisation vorgenommen. Für ummantelte Keilriemen wird zunächst der Riemenkörper bzw. der Kern aus der Elastomermischung hergestellt, dann ummantelt, man sagt auch umhüllt, und anschließend vulkanisiert.

Eine Gruppe für Riemen häufig verwendeter Grundelastomere sind Elastomere der M-Gruppe, das sind statistische Copolymere mit gesättigtem Polymergerüst, und darunter insbesondere Ethylen-Propylen-Copolymer (EPM) und Ethylen-Pro- pylen-Dien-Terpolymer (EPDM), gemeinsam auch als EP(D)M bezeichnet.

Aus diesen Elastomeren lassen sich Keilriemen mit ausgezeichneten Festigkeiten, guten Laufeigenschaften und guter Haltbarkeit und Zuverlässigkeit herstellen. Allerdings treten häufig Zielkonflikte auf, die nicht immer bewältigt werden können. So ist häufig eine hohe Kälteflexibilität mit einer niedrigeren Reißfestigkeit verbunden und umgekehrt. Eine hohe Alterungs-, Witterungs- und Ozonbeständigkeit ist nicht immer vereinbar mit hoher Festigkeit und geringer bleibender Verformung.

Im Falle ummantelter Riemen kommt hinzu, dass ein guter Kontakt zwischen dem ungehärteten Riemenkörper und der Ummantelung, d.h. zwischen Elastomermischung und Ummantelungsmaterial hergestellt werden muss, damit an der Ummantelung keine Fehlstellen oder Ablösungsprobleme entstehen können und die geforderten technischen Eigenschaften des ummantelten Gesamtriemens optimal sind. Hierfür ist in der Regel eine gewisse Konfektionsklebrigkeit der Elastomermischung erforderlich, die bei EP(D)M nicht immer vorhanden ist.

Aus der DE 601 15 350 T2 ist bereits ein nicht ummantelter Antriebsriemen unter Verwendung eines Ethylen-alpha-Olefin-Elastomers bekannt, bei dem eine bessere Verarbeitbarkeit, insbesondere eine verbesserte Walzverarbeitbarkeit und eine bessere Haftung zwischen einzelnen Gummibahnen angestrebt wurde. Hierfür war ein EP(D)M aus einem bestimmten Gewichtsanteil einer hochmolekularen Komponente mit einem relativ höheren Ethylengehalt und einem bestimmten Gewichtsanteil einer niedermolekularen Komponente mit einem relativ niedrigeren Ethylengehalt vorgeschlagen worden.

Die US 6,491,598 B1 beschreibt Keilrippenriemen aufgebaut aus Rücken, Körper und Kraftübertragungsbereich, wobei im Kraftübertragungsbereich ein Textil auf dem Kraftübertragungsbereich vorliegt. Die DE 2034506 beschreibt einen Treibriemen. Aus der DE 60112448 T2 sind Treibriemen mit adhäsiven Gummielementen mit hohem Modul bekannt. Keines dieser Dokumente betrifft ummantelte Keilriemen.

Der Erfindung liegt die Aufgabe zugrunde, Probleme und Nachteile im Stand der Technik zu vermeiden und einen ummantelten Keilriemen zur Verfügung zu stellen, der bei hoher Langlebigkeit und guten Laufeigenschaften zusätzlich einen weiten Arbeitstemperaturbereich von wenigstens -50 °C bis +130 °C abdeckt.

Diese Aufgabe wird gelöst mit dem erfindungsgemäßen ummantelten Keilriemen nach Anspruch 1 und dem zugehörigen Verbundkeilriemen nach Anspruch 12. Vorteilhafte Ausgestaltungen und Weiterbildungen der Erfindung sind in den Unteransprüchen gekennzeichnet.

Die Elastomermischung des erfindungsgemäßen ummantelten Keilriemens aus Riemenkörper und abriebfester Ummantelung ist demnach folgendermaßen zusammengesetzt:
(a) 100 phr eines Ethylen-Propylen-Copolymers (EPM) und/oder eines Ethylen-Propylen-Dien-Terpolymers (EPDM) mit einem Ethylengehalt von weniger als 50 Gew.-%,
(b) bis zu 100 phr eines verstärkenden Füllstoffs,
(c) 10 bis 50 phr eines ionischen Aktivators und
(d) 2 bis 20 phr Verstärkungsfasern bis max. 6 mm Länge
sowie optional ein Anteil an Zusatz- und Hilfsstoffen in den dem Fachmann geläufigen Mengen, wie auf diesem Arbeitsgebiet üblich, wobei der Gesamtkautschukgehalt der Elastomermischung aus EPM, EPDM oder einer Mischung dieser Bestandteile mit jeweils einem Ethylengehalt von mindestens 50 Gew.-% besteht.

Die Elastomermischung wird wie üblich unter Verwendung eines Radikalbildners, z.B. eines Peroxids, radikalisch vernetzt.

Die abriebfeste Ummantelung ist eine Textilummantelung. Als Ummantelungsmaterial werden textile Halbzeuge wie Gewebe, Gewirke, Gestricke, Geflechte, Vliesstoffe und Filze verwendet, wobei Gewebe, Gewirke und Vliese bevorzugt eingesetzt werden. Die Textilummantelung wird bevorzugt in 1 bis 3 Lagen aufgebracht. Für eine mehrlagige Ummantelung wird vorzugsweise ein gummiertes bzw. getränktes Hüllmaterial verwendet. Die Gummierung kann aus der erfindungsgemäß verwendeten Elastomermischung bestehen. Auch andere Gummierungen sind jedoch geeignet. Vorzugsweise wird eine Gummierung bzw. Beschichtung aus EP(D)M-Material verwendet.

Verfahren für die Ummantelung des Riemens mit der abriebfesten Ummantelung sind im Stand der Technik seit langem bekannt. Solche Verfahren werden u.a. in der DE 1 729 833 beschrieben.

Das für den erfindungsgemäßen Riemen gewählte Grundelastomer ist ein EP(D)M mit einem relativ geringen Ethylengehalt von weniger als 50 Gew.-% (bezogen auf die Grundelastomermasse bzw. die Masse der Kautschukkomponente). Dabei handelt es sich um ein im Wesentlichen amorphes Polymer mit geringem kristallinen Anteil, das eine relativ hoher Kälteflexibilität einbringt.

Die Elastomermischung enthält hierfür 100 phr eines Ethylen-Propylen-Copoly- mers (EPM) und/oder eines Ethylen-Propylen-Dien-Terpolymers (EPDM), besteht also aus EPM, EPDM oder einer Mischung dieser Bestandteile, wobei alle Bestandteile, d.h. zu vernetzenden Copolymere, den angegebenen geringen Ethylengehalt von in jedem Falle unter 50 Gew.-% aufweisen. Der Dien-Gehalt des EPDM liegt vorzugsweise bei bis zu 10 Gew.-%.

Das Grundelastomer besitzt außerdem vorzugsweise ein eher niedriges Molekulargewicht von kleiner 105 (Da) - (MGw < 105). Weiterhin ist bevorzugt, dass das Grundelastomer kein Polymer außerhalb der M-Gruppe und auch in untergeordneter Menge kein gruppenfremdes Co-Monomer enthält. Insbesondere soll die Elastomermischung möglichst wenig und vorzugsweise kein Ethyliden-Norbornen (ENB) enthalten.

Die Zusammensetzung der Elastomermischung ist immer auf den Gesamt-Kautschukgehalt (Grundelastomergehalt) bezogen (100 phr). Der Gehalt der übrigen Bestandteile der Mischung und damit das relative Verhältnis der Bestandteile in dem Elastomer ist in phr, d.h. "parts per hundred parts by weight of rubber" ange- geben, wie in der Gummiindustrie und damit für Kautschukpolymere allgemein üblich.

Das erfindungsgemäß eingesetzte EP(D)M besitzt vorzugsweise eine Mooney-Viskosität ML1+4 bei 125 °C von weniger als 40.

Trotz des stark amorphen Grundpolymers und dessen vergleichsweise geringer Viskosität, wird bei der Erfindung davon abgesehen, den Gehalt an verstärkendem Füllstoff höher anzusetzen. Dieser beträgt in vergleichbaren EP(D)M Mischungen häufig zwischen 50 und 200 phr. Erfindungsgemäß ist jedoch vorgesehen, dass nur bis zu 45 phr eines verstärkenden Füllstoffs, d.h. eines einzelnen Füllstoffs der auf diesem Arbeitsgebiet bekannten und allgemein verwendeten Art oder eines Füllstoff-Gemischs, eingesetzt werden.

Um dem Riemen trotz der guten Kälteflexibilität und der guten Haftklebrigkeit während der Verarbeitung eine gute Festigkeit, Seitenstabilität und Haltbarkeit zu verleihen, wird einerseits ein Coaktivator, nämlich ein ionischer Aktivator, wie unten noch näher beschrieben, und andererseits ein Anteil an Verstärkungsfasern, vorzugsweise Kurzfasern bzw. Kurzstapelfasern, verwendet.

Wegen der Ummantelung des Riemens muss die Elastomermischung selbst nicht in Bezug auf eine höhere Abriebfestigkeit eingestellt werden, da die Abriebfestigkeit von der Ummantelung bereitgestellt wird, d.h. das Riemenmaterial kann sich unterhalb der Ummantelung nicht im eigentlichen Sinne (oberflächlich) abreiben. Auch die Verstärkungsfasern dienen daher nicht - wie sonst sehr häufig - zur Erhöhung der Abriebfestigkeit. Sie können deshalb konkret in Bezug auf andere gewünschte Eigenschaften ausgewählt werden. In besonders vorteilhafter Weise werden solche Verstärkungsfasern gewählt, die speziell die Festigkeit des

Elastomermaterials und damit des Riemens steigern. Kompressibilität und bleibende Verformung sollten klein gehalten werden.

In bevorzugten Ausführungsformen der Erfindung beträgt der Ethylengehalt des EP(D)M 40 bis 48 Gew.-%, weiter bevorzugt 45 Gew.-% bis 48 Gew.-%. Die erfindungsgemäß eingesetzte Elastomermischung enthält 10 bis 50 phr, vorzugsweise 10 bis 45 phr, weiter vorzugsweise 10 bis 40 phr und besonders bevorzugt 20 bis 40 phr des ionischen Aktivators.

Der Aktivator beeinflusst soweit theoretisch erfassbar die Vernetzung und die Eigenschaften des erhaltenen Elastomers, vermutlich aufgrund ionischer Wechselwirkungen. Die bekannten ionischen Aktivatoren werden auch als Co-Aktivatoren bezeichnet und beschleunigen und verstärken danach die radikalische Vernetzung, insbesondere eine Peroxidvernetzung (Vulkanisation) in (Kautschuk)Elasto- meren. Dieselben Substanzen werden teils auch als Adhäsiv-Adjuvantien bezeichnet. Derartige Substanzen - die ionischen Aktivatoren gemäß der Erfindung - sind z. B. grundlegend in US 1 091 818 beschrieben. Es handelt sich dabei unter anderem um Acrylate, Methacrylate, Maleate und Bismaleimide, ggf. auch um Oxime oder Cyanurate. Als häufig verwendete ionische Aktivatoren haben sich Metallsalze ungesättigter organischen Alpha-Beta-Säuren durchgesetzt.

Der ionische Aktivator ist hier bevorzugt ein Metallsalz einer ungesättigten Carbonsäure nach der allgemeinen Formel:

(R-C(R")=C(R')-COO-)nMn+,

mit:
R = H, COOH, Vinyl, CH2COOH, Methyl oder Aryl,
R' = H, Methyl, Ethyl, COOH,
R" = H, COOH, und
M = Metall ausgewählt aus der Gruppe Ca, Mg, Na, AI, Zn.

Besonders bevorzugt sind Zinksalze, insbesondere Zinkdiacrylat oder Zink-dimethacrylat.

Die vorteilhaften Eigenschaften des erfindungsgemäßen ummantelten Keilriemens ergeben sich unter anderem aus einem Zusammenwirken des mittleren - nicht zu hohen und nicht zu niedrigen - Gehalts an ionischem Aktivator und des geringen bis mittleren Gehalts an besonders gewählten Verstärkungsfasern, die die Festigkeit und Formbeständigkeit des vulkanisierten Riemens erhöhen. Bei ummantelten Keilriemen sind keine Verstärkungsfasern zur Erhöhung der Abriebfestigkeit oder zur Verringerung von Laufgeräuschen erforderlich. Die nötige Riemenkörperfestigkeit - insbesondere Seitenstabilität und geringe bleibende Verformung - ist gerade bei EP(D)M-Kautschuken sehr gut mit Hilfe des ionischen Aktivators, insbesondere Zink(meth)acrylat, einstellbar, so dass zusätzliche Verstärkungsfasern überflüssig oder sogar unangebracht erscheinen müssten.

Überraschenderweise wurde jedoch gefunden, dass Verstärkungsfasern, und zwar insbesondere solche, die gezielt die Druckfestigkeit des vulkanisierten Elastomers erhöhen, wie unten näher beschrieben, einen Teil des ansonsten unter anderem für diesen Zweck eingesetzten ionischen Aktivators ersetzen und dabei die mechanischen Eigenschaften, die Haltbarkeit und die Laufeigenschaften des Riemens verbessern können. Durch das Zusammenwirken des nicht zu hohen und nicht zu geringen Anteils an ionischem Aktivator und des Verstärkungsfaseranteils erhält man eine bessere Biegsamkeit des Riemens insgesamt, d.h. eine verringerte Biegesteifigkeit, bei gleichzeitig guter Druckfestigkeit, sehr geringer bleibender Verformung und guter Seitenstabilität.

Die hierzu ausgewählten Verstärkungsfasern sind allgemein Kurzfasern mit einer Länge nicht über 6 mm, besonders bevorzugt Stapelfasern mit dieser Maximallänge. In bevorzugten Ausführungsformen betragen die Faserlängen 1 mm bis 6mm.

Die Verstärkungsfasern werden anhand eines geeigneten Indikators ausgewählt. Unter einem "Indikator" wird hier eine physikalische bzw. mechanische Materialeigenschaft oder eine Kennzahl aus der Werkstoffprüfung verstanden, die ausgehend von technischen Erfahrungen auf dem Arbeitsgebiet geeignet ist, eine erhöhte Wahrscheinlichkeit für eine positive Zieleigenschaftsveränderung anzugeben. Allgemein können z.B. bestimmte Shore-Härten, mechanische Module (Elastizitätsmodul, Kompressionsmodul usw.), die Reißfestigkeit, Bruchdehnung, Biegefestigkeit und vieles andere herangezogen werden, um die Wahrscheinlichkeit für die positive Beeinflussung einer Zielgröße abschätzen zu können. Im vorliegenden Falle werden die Verstärkungsfasern vorzugsweise so ausgewählt, dass sie die Druckfestigkeit der vulkanisierten Elastomermischung erhöhen.

Als Indikator für die Erhöhung der Druckfestigkeit, die wiederum weitere positive Zieleigenschaften wie eine verbesserte Seitenstabilität anzeigt, wird hier ein Kennwert im Zusammenhang mit der Kompressibilität des Materials verwendet.

Bevorzugt wird die Erhöhung der Druckfestigkeit der vulkanisierten Elastomermischung anhand eines mit der Kompression oder bleibenden Verformung in Zusammenhang stehenden Indikators bestimmt. Als Indikator kann insbesondere der Druckverformungsrest (compression set), der Kompressionsmodul (compression modulus, compressive modulus) oder ein anderer Material-Kompressionswert verwendet werden.

Der Druckverformungsrest wird vorzugsweise nach DIN ISO 815-1 oder ASTM D 575-91 bestimmt, er sollte für eine gute Druckfestigkeit gering sein. Es können jedoch auch andere Methoden zum Einsatz kommen, um Kompressionswerte, Kompressibilitäten oder Druckverformungsreste zu bestimmen, da es hier auf die relativen Veränderungen bei Zugabe ausgewählter Verstärkungsfasern ankommt.

Die Auswahl der Verstärkungsfasern kann in einfachen Vorversuchen geschehen.

Für die Vorversuche werden verschiedene Elastomermischungen nach der Erfindung hergestellt, wobei die Verstärkungsfasern - nach Art, Länge und Menge - variiert werden. Aus den Elastomermischungen werden vulkanisierte Testkörper gefertigt, an denen beispielsweise der Druckverformungsrest, die Kompressibilität oder ein definierter Kompressionsmodul ermittelt werden. Die Festigkeit des Riemenelastomers lässt sich so gezielt beeinflussen, wobei die Mischungsrezeptur als solche im Rahmen des grundsätzlich hier Offenbarten bleibt. Man erhält einen Riemen mit optimierten Eigenschaften.

Vorzugsweise sind die Verstärkungsfasern Aramidfasern oder enthalten Aramidfasern im Gemisch mit anderen Fasern, wie sie dem Fachmann auf dem Gebiet als Verstärkungsfasern allgemein bekannt sind. Geeignete Aramidfasern sind unter anderem Fasern aus Kevlar^{®} (DuPont, USA, meta-Aramid), Nomex^{®} (DuPont, USA, para-Aramid, aromatisch), Technora^{®} (para-Aramid-Copolymer, ggf. RFL- behandelt, von Tejin, JP) und Conex^{®} (meta-Aramid von Teijin, JP). Weitere bevorzugte Verstärkungsfasern sind unter anderem Carbonfasern, Glasfasern, Cycloolefincopolymer-Fasern oder Polyimidfasern, die jeweils allein oder im Gemisch mit anderen Fasern eingesetzt werden können. Die genannten bevorzugten Fasern sind in einem Fasergemisch vorzugsweise im Überschuss (mit einem Anteil größer als 50 Gew.-% oder größer als 50 Vol.-%) enthalten.

Als Füllstoff kann grundsätzlich jeder für Kautschuk-Elastomere übliche, bekannte Füllstoff eingesetzt werden. Besonders bevorzugt ist es jedoch, wenn wenigstens 80 Gew.-% des verstärkenden Füllstoffs aus Ruß bestehen, vorzugsweise wenigstens 90 Gew.-% des Füllstoffs. In besonders bevorzugten Ausführungsformen besteht der Füllstoff insgesamt, also zu 100 % aus Ruß, und zwar weiter bevorzugt, für jede gewählte Menge, aus leitfähigem Ruß.

Der Füllstoffgehalt beträgt vorzugsweise bis zu 100 phr, weiter bevorzugt bis zu 60 phr, besonders bevorzugt bis zu 45 phr. Weiterhin ist eine Menge von 10 phr bis 45 phr, insbesondere von 10 phr bis 40 phr bevorzugt.

Gemäß einem bevorzugten Aspekt der Erfindung enthält die Elastomermischung kein Öl-Additiv, insbesondere kein Mineralöl. In jedem Fall soll ein gegebenenfalls vorhandener Öl-Anteil, der beispielsweise durch aufbereitete Zusatz- und Hilfsstoffe in die Elastomermischung gelangen kann, unter 5 Gew.-%, weiter bevorzugt unter 3 Gew.-% und besonders bevorzugt maximal bis zu 2 Gew.-% betragen. Öl- Additive und Öl aus anderen Additiven werden häufig nicht gut in das vulkanisierte Elastomer eingebunden und verschlechtert die Alterungsbeständigkeit des Riemens. Ein höherer Ölgehalt wird daher im Rahmen der Erfindung vermieden.

In der Elastomermischung können weitere, nicht ausdrücklich angegebene, in der Kautschukindustrie übliche Zusatz- und Hilfsstoffe in den üblichen, dem Fachmann bekannten Mengen, enthalten sein. Zusatz- und Hilfsstoffe sind beispielsweise solche aus der Gruppe Weichmacher, außer Öl, Dispergiermittel, Mastizier- mittel, Plastifizierer, Antioxidantien, UV-Schutzmittel, Farbstoffe, Scorch-Verzöge- rer, Verarbeitungshilfsmittel, Haftvermittler, Trennmittel, Gleitmittel, Stabilisatoren, Vernetzungsbeschleuniger, Vernetzungsverzögerer, Alterungsschutzmittel und andere mehr sowie Radikalbildner als Vernetzungsmittel.

Die Elastomermischung wird radikalisch vernetzt und enthält vorzugsweise einen Radikalbildner, der in den bevorzugten Ausführungsformen in einer Menge von ca. 2 bis 12 phr, vorzugsweise 3 bis 7 phr, in der Elastomermischung enthalten sein kann. Als Radikalbildner können alle in der Kautschukindustrie für diesen Zweck bekannten Stoffe verwendet werden, u.a. Azo-bis(isobutyronitril) und besonders bevorzugt Peroxide, insbesondere organische Peroxide, wie zum Beispiel Dicu- mylperoxid, Dit-butyl-Peroxid, Diisopropylbenzol, t-Butylperbenzoat oder alpha- alpha-bis(t-butylperoxy)diisopropylbenzol. Andere Peroxidstarter sind dem Fachmann bekannt und können ebenfalls hier eingesetzt werden.

Die abriebfeste Ummantelung wird grundsätzlich aus einem Textilmaterial gebildet, das heißt, das Ummantelungsmaterial oder Hüllmaterial ist ein textiles Material, bevorzugt ein Gewebe, Gewirk oder Gestrick. Geeignete Hüllmaterialien sind bekannt und in Gebrauch. Geeignet sind beispielsweise Schlauchgewebe oder Schrägschuss-Gewebe, vorzugsweise aus Baumwolle/Polyester oder Baumwolle/Polyamid. Sie sind trocken oder gummiert kommerziell erhältlich und können vom Fachmann der jeweiligen Aufgabe bzw. Riemenverwendung entsprechend ausgewählt werden. Auch die Ummantelungstechniken sind bekannt. In der Regel wird ein in Streifen vorliegendes Hüllmaterial um den rohen Riemenkörper gewickelt.

In bevorzugten Ausführungsformen wird die abriebfeste Ummantelung aus einem Gewebe, sogenanntem Hüllgewebe, gebildet. Die Ummantelung kann einschichtig, vorzugsweise jedoch an einer Riemenfläche überlappend, oder mehrschichtig vorgenommen werden, bevorzugt 1 - bis 3-schichtig und besonders bevorzugt 2-schichtig.

In bevorzugten Ausführungsformen besteht die abriebfeste Ummantelung des erfindungsgemäßen Keilriemens aus einem ein- oder mehrschichtig aufgebrachten gummierten Textil, vorzugsweise einem gummierten Gewebe. Besonders bevorzugt ist eine zweischichtig aufgebrachte, ein- oder beidseitig gummierte Gewebeauflage, wie sie als abriebfestes Riemenhüllgewebe, z.B. Schrägschussgewebe, kommerziell erhältlich ist.

Der ummantelte Keilriemen besitzt einen Riemenkörper, auch als Kern bezeichnet, der vorzugsweise eine Zuglage umfasst. Die Zuglage ist vorzugsweise eine Zugträgerlage, die aus einzelnen Zugträgern oder Corden gebildet wird. Die Zugträger sind ihrerseits häufig aus mehreren Strängen geschlagen oder gezwirnt, wobei die Stränge aus Fasern bzw. Filamenten aus einem geeigneten, zugfesten Material gebildet werden. Die Zugträger können übliche, kommerziell erhältliche Zugträger aus den hierfür bekannten Materialien sein. Geeignete Zugträgermaterialien sind beispielsweise Aramid, Polyester, Carbon und Glas. Die Corde können umspritzt oder gummiert sein.

Die Zuglage bzw. die Zugträger können unmittelbar in den Riemenkörper integriert sein. Sie befinden sich dann zwischen einem Ober- und einem Unterkern, die gemeinsam den Kern bzw. Riemenkörper bilden. Sie kann auch an der Oberseite auf den Kern aufgelegt sein, ohne dass ein Oberkern vorhanden ist. Ein ggf. vorhandener Oberkern kann auch als Gummiabdeckung oder Decklage bezeichnet werden. Die Decklage muss nicht zwingend aus dem Riemenkörper-Elastomer bestehen, andere Elastomere sind möglich, vorzugsweise jedoch ebenfalls aus

EP(D)M-Material. In alternativer Ausführungsform können die Zugträger in eine besondere Elastomerschicht, die nicht aus der erfindungsgemäßen Elastomermischung bestehen muss und die bezüglich der Haftung an den Zugträgern optimiert sein kann, eingebettet sein: Diese Schicht wird auch als Einbettungsschicht bezeichnet.

Die Aufgabe der Erfindung wird auch von einem entsprechenden Verbundriemen mit mehreren, nämlich wenigstens zwei ummantelten Keilriemen nach der Erfindung gelöst, wobei die Keilriemen, die die Rippen des Verbundriemens bilden, an ihrer Oberseite über eine Deckplatte miteinander verbunden sind. Verbundriemen sind lange bekannt und in Gebrauch. Sie besitzen bestimmte Vorteile für bestimmte Antriebsaufgaben. Die einzelnen Rippen in der Form von Keilriemenkörpern sind jede für sich ummantelt und mit Hilfe der Deckplatte zu einem Band verbunden, so dass die Erfindung ebenfalls für Verbundriemen sehr vorteilhaft angewendet werden kann. Verbundriemen, englisch und international "joined V-belts" werden auch als Kraftbänder bezeichnet. Ein Kraftband mit ummantelten Rippen ist beispielsweise in der DT 2 213 424 angegeben.

### BEISPIEL

### Beispielzusammensetzung für die Elastomermischung mit Faserbeladuna:

100 phr EPM (Ethylengehalt: 45 Gew.-%)
35 phr Ruß (leitfähig)
35 phr ZinkDimethacrylat
3 phr Aramidfasern (1 mm)
0,5 phr Alterungsschutzmittel
1 phr Stearinsäure
6 phr Peroxidvernetzer

### Fasern: 1 bis 3 mm Stapelfasern "Technora^{®}", Tejin, JP, oder 3 bis 6 mm Stapelfasern "Conex", Tejin, JP

Textilummantelung: gummiertes Textilgewebe aus Baumwoll-Polyester Schrägschuss-Gewebe, gummiert mit EPM-Kautschukmischung Im Folgenden wird die Erfindung anhand von Riemen-Ausführungsbeispielen, die in den Figuren gezeigt sind, näher erläutert. Dies dient ausschließlich illustrativen Zwecken und dem leichteren Verständnis der nicht auf die Ausführungsformen der Figuren beschränkten Erfindung. Es zeigen:
- Figur 1 -: einen ummantelten Einzelkeilriemen in schematischer, perspektivischer, teilenthüllter Ansicht;
- Figur 2 -: eine schematische Querschnittsansicht eines Doppelkeilriemens;
- Figur 3 -: ein Kraftband mit verbundenen Keilriemen bzw. mehreren Rippen.

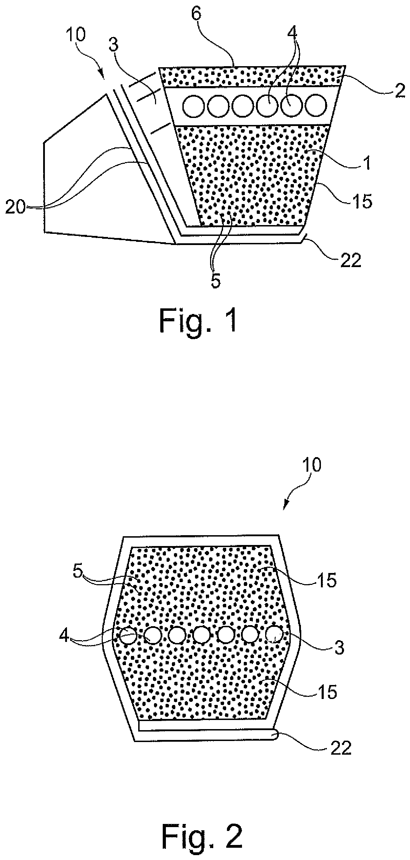

Figur 1 zeigt einen klassischen Einzelkeilriemen mit trapezförmigem Querschnitt. Der ummantelte Keilriemen 10 besitzt einen Riemenkörper 15 mit einem Unterkern 1 , einem Oberkern 2 und einer Zuglage 3 aus einzelnen Zugsträngen 4. Die Zuglage 3 ist im vorliegenden Beispiel gummiert, d.h. die Zugstränge 4 sind in eine Elastomermischung eingebettet, die nicht gleich der Elastomermischung des Riemenkerns, insbesondere des Unterkerns 1 sein muss. Alternativ wäre es auch möglich, die Zugstränge 4 unmittelbar zwischen Oberkern und Unterkern einzupressen, wie weiter unten für den Doppelkeilriemen nach Figur 2 beschrieben. Die Außenfläche des Oberkerns 2 bzw. einer Decklage befindet sich an der Oberseite 6 des Keilriemens, die von einer Riemenscheibe aus gesehen nach außen gerichtet ist. Die Elastomermischung des Unterkerns 1 und des Oberkerns 2 enthält Verstärkungsfasern 5 aus Aramid, und zwar hier Technora- oder Conex-Stapelfasern. Der gesamte Riemenkörper 15 aus Unterkern 1 , Oberkern 2 und Zuglage 3 ist mehrschichtig, nämlich zweischichtig mit einem Umhüllungsmaterial 20 ummantelt. Das Umhüllungsmaterial 20 ist gummiert und zweifach nach üblicher Technik um den Riemenkörper 15 gewickelt, sodass sich insgesamt die abriebfeste Ummantelung 22 ergibt.

Figur 2 zeigt als ein weiteres Ausführungsbeispiel für einen ummantelten Keilriemen 10 einen Doppelkeilriemen. Der Querschnitt des Doppelkeilriemens stellt ein Sechseck aus zwei flächengleichen Trapezen dar, die an der Oberseite zusammengefügt wurden. In dieser Ebene, an der Verbindungsfläche der beiden Trapeze, liegt die Zuglage 3 aus den einzelnen Zugsträngen 4, die hier unmittelbar in das Material des Riemenkörpers 15 zwischen den beiden Kernen eingebettet sind. Die Corde sind bevorzugt gummiert oder umspritzt. Die Verstärkungsfasern 5 erstrecken sich auf diese Weise durch den gesamten Riemenkörper 15, und das durch die Fasern verstärkte Elastomermaterial erstreckt sich um die Zugstränge herum. Die Ummantelung 22 besteht aus einem dafür geeigneten und üblichen gummierten Textilgewebe.

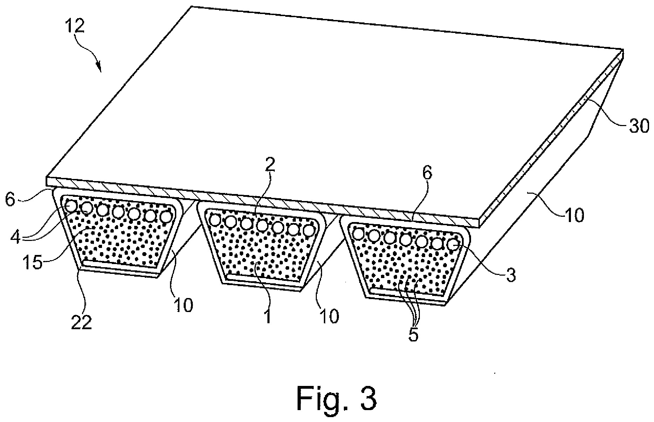

Figur 3 zeigt einen Verbundriemen 12, auch als "joined V-belt" oder Kraftband bezeichnet. Der Verbundriemen 12 besteht aus wenigstens zwei ummantelten Keilriemen 10 nach dieser Erfindung, die an ihrer Oberseite 6 über eine Deckplatte 30 miteinander verbunden sind. Die Deckplatte 30 kann auch aus mehreren Schichten bestehen und unterschiedliche Materialien sowie ggf. Verstärkungsschichten (Gitter, Vliese u.dgl.) umfassen. Dies ist hier nicht im Einzelnen dargestellt. Die verbundenen Einzelkeilriemen 10 bilden an dem Kraftband Rippen, im vorliegenden Falle sind drei Rippen dargestellt. Die Rippen entsprechen dem, was schon zu den Einzelkeilriemen 10 beschrieben wurde. Die hier trapezförmigen bzw. keilförmigen Riemenkörper 15 mit ihren zuvor schon beschriebenen Bestandteilen sind vollständig von der Ummantelung 22 umgeben, die Deckplatte 30 verbindet die Rippen, d.h. die ummantelten Einzelkeilriemen 10 bzw. die ummantelten Riemenkörper 15.

### Bezugszeichenliste

- 1: Unterkern
- 2: Oberkern
- 3: Zuglage
- 4: Zugstrang
- 5: Verstärkungsfaser(n)
- 6: Oberseite

- 10: ummantelter Keilriemen
- 12: Verbundriemen
- 15: Riemenkörper

- 20: Umhüllungsmaterial
- 22: Ummantelung
- 30: Deckplatte

## Patentansprüche

1. Ummantelter Keilriemen (10) mit einem Riemenkörper (15) aus einer radikalisch vernetzten Elastomermischung und mit einer abriebfesten Ummantelung (22), **dadurch gekennzeichnet, dass** der Gesamtkautschukgehalt der Elastomermischung aus EPM, EPDM oder einer Mischung dieser Bestandteile mit jeweils einem Ethylengehalt von weniger als 50 Gew.-% besteht und dass die Elastomermischung aus
(a) 100 phr des Ethylen-Propylen-Copolymers (EPM) und/oder des Ethylen-Propylen-Dien-Terpolymers (EPDM),
(b) bis zu 100 phr eines verstärkenden Füllstoffs,
(c) 10 bis 50 phr eines ionischen Aktivators und
(d) 2 bis 20 phr Verstärkungsfasern bis max. 6 mm Länge
sowie optional einem Anteil an Zusatz- und Hilfsstoffen besteht, wobei die abriebfeste Ummantelung (22) eine Textilummantelung ist.

2. Keilriemen nach Anspruch 1, **dadurch gekennzeichnet, dass** der Ethylengehalt des EP(D)M 40 bis 48 Gew.-% beträgt.

3. Keilriemen nach Anspruch 1 oder 2, **dadurch gekennzeichnet, dass** der ionische Aktivator ein Metallsalz einer ungesättigten Carbonsäure ist, vorzugsweise ein Zinksalz, weiter vorzugsweise Zinkdiacrylat oder Zinkdimethacrylat.

4. Keilriemen nach einem der Ansprüche 1 bis 3, **dadurch gekennzeichnet, dass** die Verstärkungsfasern (5) so ausgewählt sind, dass sie die Druckfestigkeit der vulkanisierten Elastomermischung erhöhen.

5. Keilriemen nach Anspruch 4, **dadurch gekennzeichnet, dass** die Erhöhung der Druckfestigkeit der vulkanisierten Elastomermischung anhand eines mit der Kompression oder bleibenden Verformung in Zusammenhang stehenden Indikators bestimmt wird.

6. Keilriemen nach Anspruch 4 oder 5, **dadurch gekennzeichnet, dass** die Verstärkungsfasern (5) Aramidfasern sind oder überwiegend Aramidfasern enthalten.

7. Keilriemen nach einem der Ansprüche 1 bis 6, **dadurch gekennzeichnet, dass** wenigstens 80 Gew.-% des verstärkenden Füllstoffs aus Ruß bestehen.

8. Keilriemen nach einem der Ansprüche 1 bis 7, **dadurch gekennzeichnet, dass** die Elastomermischung kein Öl-Additiv, insbesondere kein Mineralöl enthält.

9. Keilriemen nach einem der Ansprüche 1 bis 8, **dadurch gekennzeichnet, dass** die abriebfeste Ummantelung (22) aus einem ein- oder mehrschichtig aufgebrachten gummierten Textil besteht.

10. Keilriemen nach einem der Ansprüche 1 bis 9, **dadurch gekennzeichnet, dass** der Riemenkörper eine Zuglage (3) umfasst.

11. Keilriemen nach Anspruch 10, **dadurch gekennzeichnet, dass** die Zuglage (3) mit einer Decklage (2) versehen ist.

12. Verbundriemen (12) mit wenigstens zwei ummantelten Keilriemen (10) nach einem der Ansprüche 1 bis 11, die an ihrer Oberseite (6) über eine Deckplatte (30) miteinander verbunden sind.

## Claims

1. A sheathed V-belt (10) having a belt body (15) of a radically cross linked elastomeric composition and having an abrasion-resistant sheathed (22), **characterized in that** the total rubber content of the elastomeric compound of EPM, EPDM or a mixture of these components each having an ethylene content of less than 50 % by weight and that the elastomeric compound consist of
(a) 100 phr of ethylene-propylene-copolymers (EPM) and/or ethylene-propylene-diene-terpolymer (EPDM);
(b) up to 100 phr of a reinforcing filler;
(c) 10 to 50 phr of an ionic activator; and
(d) 2 to 20 phr reinforcing fibres up to max. 6 mm in length
and optionally a proportion of additives and auxiliaries, the abrasion-resistant sheathing (22) being a textile sheathing.

2. V-belt according to claim 1, **characterized in that** the ethylene content of the EP(D)M is 40 to 48 percent by weight.

3. V-belt according to claim 1 or 2, **characterized in that** the ionic activator is a metal salt of an unsaturated carboxylic acid, preferably a zinc salt, a further preferable zinc diacrylate or zinc dimitacrylate.

4. V-belt according to any one of claims 1 to 3, **characterized in that** the reinforcing fibres (5) are selected so as to increase the compressive strength of the vulcanized elastomeric composition.

5. The V-belt according to claim 4, **characterized in that** the increase and compression strength of the vulcanized elastomeric composition is determined by means of an indicated or related compression or a permanent deformation.

6. V-belt according to claim 4 or 5, **characterized in that** the reinforcing fibres (5) are aramid fibres or permanently contain aramid fibres.

7. The V-belt according to any one of claims 1 to 6, **characterized in that** at least 80 percent by weight of the reinforcing filler consist of carbon black.

8. The V-belt according to any one of claims 1 to 7, **characterized in that** the elastomer composition contains no oil, in particular, no mineral oil.

9. The V-belt according to any one of claims 1 to 8, **characterized in that** the abrasive-resistant sheathing (22) consist of a rubberized textile applied in one our more layers.

10. The V-belt according to any one of claims 1 to 9, **characterized in that** the belt body comprises a tensile ply (3).

11. The V-belt according to claim 10, **characterized in that** the tensile ply (3) is provided with a cover ply (2).

12. Composite belt (12) with at least two sheathed V-belts (10) according to any one of claims 1 to 11, which are connected to each other at their upper side (6) via a cover plate (30).

## Revendications

1. Courroie trapézoïdale gainée (10) comportant un corps de courroie (15) en un mélange élastomère, réticulé par voie radicalaire, et une gaine (22) résistante à l'abrasion,
**caractérisée en ce que** la teneur totale en caoutchouc du mélange élastomère est constituée de EPM, de EPDM ou d'un mélange de ces composants, ayant chacun une teneur en éthylène inférieure à 50 % en poids, et **en ce que** le mélange élastomère est constitué de
(a) 100 phr d'un copolymère éthylène-propylène (EPM) et/ou d'un terpolymère éthylène-propylène-diène (EPDM),
(b) jusqu'à 100 phr d'une charge de renforcement,
(c) 10 à 50 phr d'un activateur ionique, et
(d) 2 à 20 phr de fibres de renforcement d'une longueur maximale de 6 mm, ainsi que, en option, une proportion d'additifs et d'adjuvants, la gaine (22) résistante à l'abrasion étant une gaine textile.

2. Courroie trapézoïdale selon la revendication 1,
**caractérisée en ce que** la teneur en éthylène du EP(D)M est de 40 à 48 % en poids.

3. Courroie trapézoïdale selon la revendication 1 ou 2,
**caractérisée en ce que** l'activateur ionique est un sel métallique d'un acide carboxylique insaturé, de préférence un sel de zinc, de préférence encore le diacrylate de zinc ou le diméthacrylate de zinc.

4. Courroie trapézoïdale selon l'une des revendications 1 à 3,
**caractérisée en ce que** les fibres de renforcement (5) sont choisies de manière à augmenter la résistance à la compression du mélange élastomère vulcanisé.

5. Courroie trapézoïdale selon la revendication 4,
**caractérisée en ce que** l'augmentation de la résistance à la compression du mélange élastomère vulcanisé est déterminée à l'aide d'un indicateur lié à la compression ou à la déformation permanente.

6. Courroie trapézoïdale selon la revendication 4 ou 5,
**caractérisée en ce que** les fibres de renforcement (5) sont des fibres d'aramide ou contiennent principalement des fibres d'aramide.

7. Courroie trapézoïdale selon l'une des revendications 1 à 6,
**caractérisée en ce qu'**au moins 80% en poids de la charge de renforcement sont constitués de noir de carbone.

8. Courroie trapézoïdale selon l'une des revendications 1 à 7,
**caractérisée en ce que** le mélange élastomère ne contient pas d'additif d'huile, en particulier pas d'huile minérale.

9. Courroie trapézoïdale selon l'une des revendications 1 à 8,
**caractérisée en ce que** la gaine (22) résistante à l'abrasion est constituée d'un textile caoutchouté appliqué en une ou plusieurs couches.

10. Courroie trapézoïdale selon l'une des revendications 1 à 9,
**caractérisée en ce que** le corps de la courroie comprend une couche de traction (3).

11. Courroie trapézoïdale selon la revendication 10,
**caractérisée en ce que** la couche de traction (3) est pourvue d'une couche de recouvrement (2).

12. Courroie composite (12) comprenant au moins deux courroies trapézoïdales gainées (10) selon l'une des revendications 1 à 11, reliées entre elles sur leur face supérieure (6) par une plaque de recouvrement (30).
